## Europäisches Patentamt

## European Patent Office

## Office européen des brevets

(11) Veröffentlichungsnummer: **0 178 628**
**B1**

(12) **EUROPÄISCHE PATENTSCHRIFT**

(45) Veröffentlichungstag der Patentschrift:
**25.04.90**

(21) Anmeldenummer: **85113043.5**

(22) Anmeldetag: **15.10.85**

(51) Int. Cl.⁴: **B23C 3/12**

(54) Vorrichtung zum Kantenfräsen an Kunststoffwerkstücken.

(30) Priorität: **17.10.84 DE 8430499 U**

(43) Veröffentlichungstag der Anmeldung:
**23.04.86 Patentblatt 86/17**

(45) Bekanntmachung des Hinweises auf die Patenterteilung:
**25.04.90 Patentblatt 90/17**

(84) Benannte Vertragsstaaten:
**CH DE FR GB IT LI**

(56) Entgegenhaltungen:
**CH-A- 330 582**
**CH-A- 400 812**
**CH-A- 622 205**
**DE-A- 1 802 733**
**DE-C- 3 004 389**
**FR-A- 894 614**
**NL-A- 294 381**
**US-A- 2 466 082**
**US-A- 3 579 928**
**US-A- 4 186 628**

(73) Patentinhaber: **Röhm GmbH, Kirschenallee**
**Postfach 4242, D-6100 Darmstadt 1(DE)**

(72) Erfinder: **Hanstein, Friedrich, Darmstädter-Strasse 66,**
**D-6112 Gross-Zimmern(DE)**
Erfinder: **Hartmann, Heinrich, In der Aue 17 a,**
**D-6101 Reichelsheim(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Gebiet der Neuerung

Die Neuerung betrifft eine Vorrichtung zum Fräsen von Kanten, insbesondere der Kanten von Werkstücken aus thermoplastischem bzw. thermoelastischem Kunstoff gemäß Oberbegriff von Patentanspruch 1 (siehe DE-C 3 004 389).

### Stand der Technik

Das Polieren von Sägeschnittkanten bei Platten oder Blockmaterial aus thermoplastischem bzw. thermoelastischem Kunststoffmaterial ist bei den Arbeitsweisen des Standes der Technik mit einem nicht unbedeutenden Arbeits- und Kostenaufwand verbunden. In der Regel sind mehrere Arbeitsgänge notwendig, um auch optisch saubere Randpolituren zu erreichen.

Selbst unter der Voraussetzung, daß ein verhältnismäßig glatter Kreissägeschnitt vorliegt, ist ein Naß-Feinschleifen vor dem abschließenden Polieren auf den dafür geeigneten Poliervorrichtungen wie der Schwabbel, der Filzscheibe oder dem Filzband im allgemeinen unerläßlich, um den Arbeitsaufwand beim Polieren in vertretbaren Grenzen halten zu können. Werkstücke mit darart polierten Kanten müssen in der Regel in einem weiteren Arbeitsgang von den anhaftenden Polierwachsresten gesäubert werden. Hinzu tritt daß sich beim Polieren auf dem Filz oder der Schwabbel oft eine Abrundung der Schnittkanten nicht vermeiden läßt. Auch bei dem an sich sehr effektiven Verfahren des Flammpolierens sind vor der Politur verschiedene Arbeitsgänge durchzuführen.

### Aufgabe und Lösung

Es bestand daher die Aufgabe, eine Vorrichtung zum Fräsen von Kanten, in der Regel geradlinigen Kanten, insbesondere Sägeschnittkanten bei Kunststoffen zur Verfügung zu stellen, die es erlaubt, unter möglichst geringem Arbeitsaufwand die Kanten zu glätten, daß sie den bestehenden, sehr hoch gesteckten Ansprüchen der Technik genügen. Die Kantenoberfläche sollte z.B. möglichst keine mit dem bloßen Auge feststellbaren Spuren der vorausgegangenen Bearbeitung (Sägespuren) mehr aufweisen. Gleichzeitig sollte eine Abrundung der Kanten und die Ausbildung von Oberflächenunebenheiten bei der Bearbeitung der Kantenoberfläche sicher vermieden werden. Von besonderer Bedeutung für den Erfolg der Kantenbearbeitung ist jedoch -wie die Erfahrung lehrt - die sofortige und möglichst vollständige Entfernung aller beim Fräsen bzw. Polieren der Kanten anfallenden Partikel. Vorrichtungen zum Fräspolieren von Kunststoffen sind an sich bekannt, sie werden jedoch den Anforderungen der Technik nicht in allen Stücken gerecht. Die bestehenden Aufgaben können mit Hilfe der Vorrichtung gemäß den Patentanspruch 1 in hervorragender Weise gelöst werden.

### Aufbau der Vorrichtung

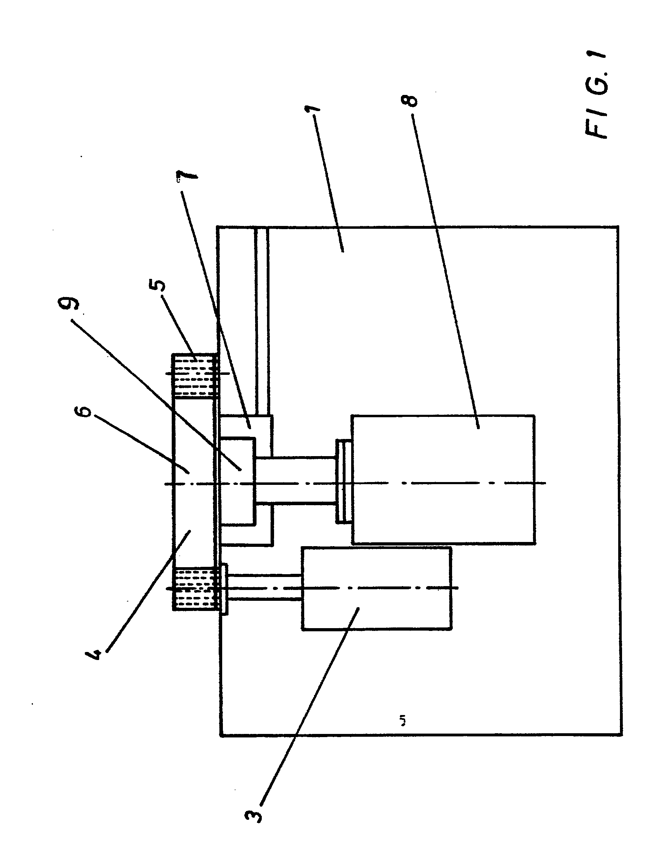

Die Vorrichtung dient zum Fräsen und gleichzeitigem Polieren der Kanten, insbesondere der Sägeschnittkanten bei thermoplastischen oder thermoelastischen Kunststoffplatten und Blockmaterial (Kunststoffmaterial K). Die im folgenden verwendeten Bezugszeichen beziehen sich auf die Figuren 1 bis 5. Die Vorrichtung besteht aus einem stabilen Gehäuse 1, dessen oberen Abschluß eine waagerechte Arbeitsplatte 2 bildet, einem am Gehäuse befestigten regelbaren Elektromotor 3 für den Betrieb der Transportvorrichtung 4, die aus zwei symmetrisch angeordneten, um je zwei Antriebs- und Umlenkrollen 5 laufenden elastischen Endlostransportbändern 6 besteht, die selbständig den nötigen Preßdruck für den Vorschub des Kunststoffmaterials ausüben, und die durch den Elektromotor 3 synchron und mit gleicher Transportrichtung angetrieben werden und wobei die Arbeitsplatte 2 mittig zwischen den beiden Transportbändern 6 eine runde Öffnung 7 besitzt, welche die berührungsfreie Drehung des von einem regelbaren Elektromotor 8 angetriebenen Radialfräskopfs 9 gestattet, einer auf die Öffnung 7 hinführenden waagerechten Einlaufschiene 10 sowie einer höhenregulierbaren, um die Höhe der von Kunststoffmaterial wegzufräsenden Schicht über der Einlaufschiene 10 und in deren Richtung waagerecht angebrachten von der Öffnung 7 wegführenden Auflaufschiene 11, wobei

a) der Radialfräskopf 9 mit je einem polykristallinen, zerspanend wirkenden Diamanten 12 und einem vorwiegend polierend wirkenden Naturdiamanten 13, die diametral am Fräskopf 9 befestigt sind, bestückt ist, daß

b) der Radialfräskopf 9 von seiner Peripherie her mehrere regelmäßige Einschnitte 14 besitzt, die Turbinenwirkung hervorrufen und

c) die Öffnung 7 in einen Vakuumkanal 14 mit angeschlossener Saugvorrichtung 15 mündet, durch welchen die bei der Kantenfräsung anfallenden Partikel kontinuierlich im Vakuum abgesaugt werden.

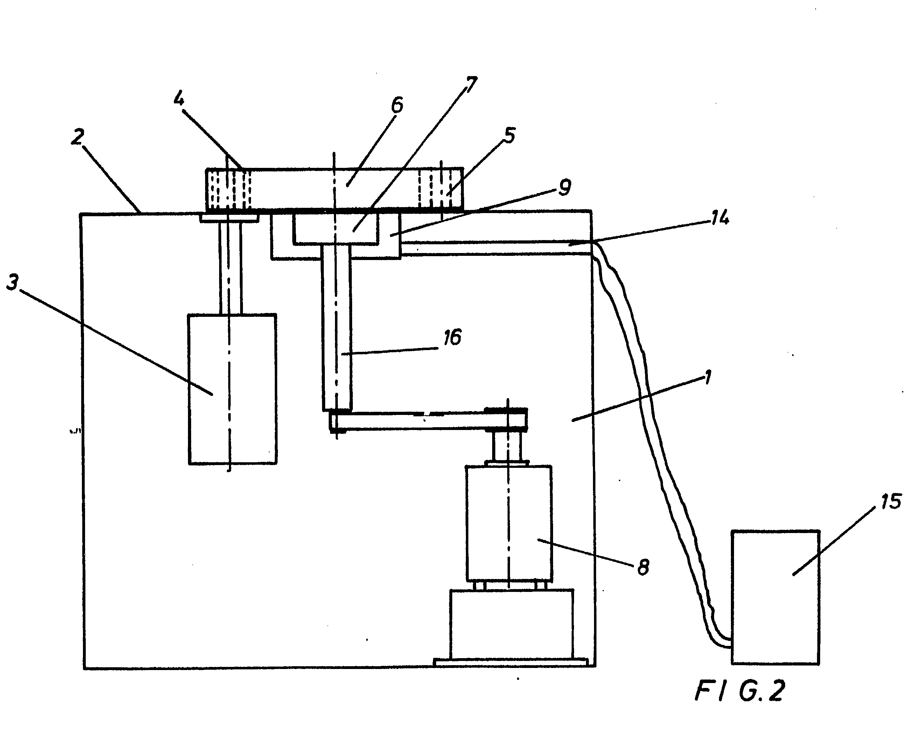

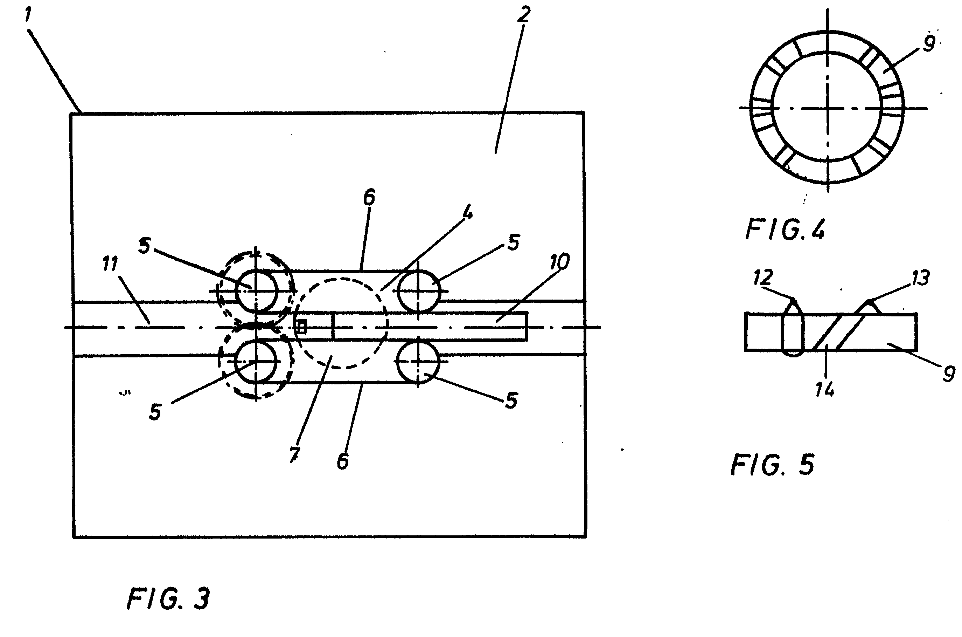

Die Figuren 1 und 2 zeigen die Vorrichtung im seitlichen Aufriß. Die Figur 3 zeigt die Vorrichtung senkrecht von oben, die Figur 4 den Radialfräskopf 9 von oben, die Figur 5 zeigt ihn von der Seite.

Bei der Herstellung der Vorrichtung kann gegebenenfalls auf bereits vorhandene bzw. im Handel befindliche Typen von Vorrichtungen zurückgegriffen werden. So können z.B. die Elemente 1 bis 8, 10 und 11 wie bei den Vorrichtungen des Standes der Technik gestaltet sein.

Durch die Verwendung von Polymerbeton als Teil des Gehäuses 1 wird die Schwingungsfähigkeit der Vorrichtung in vorteilhafter Weise reduziert.

Die Transportvorrichtung 4 umfaßt vorteilhaft Zahnriemen als Endlostransportbänder 6 mit entsprechend geformten Antriebs- und Umlenkrollen 5. Die Zahnriemen stellen sich selbständig stufenlos auf jede Werkstückdicke bis 40 mm ein.

Als Richtwert für den Material-Vorschub kann ca. 1 m pro Minute betrachtet werden. Der Durchmesser des Fräskopfes 9 liegt im Bereich von 60 bis 100 mm. Als Richtwert für die Umdrehungszahl des Fräskopfes kann ca. 15000 ± 5000 U/min betrachtet werden. Bei der Ausführungsart gemäß Fig. 1 ist daher als Antriebsaggregat 8 ein Gleichstrommotor mit ca. 15000 U/min zweckmäßig.

Bei der vorteilhaften Ausführung gemäß Fig. 2 wirkt der regelbare Elektromotor 8 über eine Hochleistungsspindel 16 auf den Radialfräskopf 9. In diesem Falle kann als Antriebsaggregat 8 auch ein Wechselstrommotor verwendet werden.

Zur Verwendung der Diamanten vgl. Häflinger et al. in Min.-Mag.2 (1978) 117-121. Vorzugsweise ist der Naturdiamant 13 unter leicht negativem Sturz am Radialfräskopf 9 befestigt.

Die erfindungsgemäße Vorrichtung eignet sich z.B. hervorragend zur Bearbeitung der Kanten von gegossenem oder extrudiertem Acrylglas, jedoch können auch andere Kunststoffe wie Polycarbonat, PVC, Polystyrol, Polyester, Polyurethan, Polyolefine u.ä. vorteilhaft bearbeitet werden.

Die zu bearbeitenden Platten werden in der Regel auf Maß (plus Bearbeitungszulage, als Richtwert gelten + 1 mm) gesägt und anschließend einzeln oder in Paketen bis zu 40 mm Gesamtdicke auf die Einkaufschiene 10 gesetzt. sodann in die Vorrichtung geschoben, wo sie von der Transportvorrichtung 4 erfaßt werden. Die Transportbänder (Zahnriemen) 6 stellen sich selbständig stufenlos auf jede Werkstückdicke bis ca. 40 mm ein. Die Länge des Werkstücks ist für alle praktischen Zwecke ziemlich unkritisch. Umrüsten oder Einrichten der Vorrichtung ist nicht mehr erforderlich.

Die Werkstücke aus dem Kunststoffmaterial werden von der Vorrichtung mit gegebenem Vorschub über den Radialfräskopf 9 geführt und nach der Bearbeitung auf die Auslaufschiene 11 geschoben.

Bei dem Fräsvorgang kann ohne zusätzliche Hilfsmittel gearbeitet werden. Damit entfällt auch eine nachträgliche Reinigung der poliergefrästen Werkstücke.

Die poliergefrästen Kanten stellen sich brillant dar, und der Spannungshaushalt der Oberfläche ist sehr gering gegenüber den üblicherweise angewendeten Politurtechniken. Hervorzuheben ist auch der erreichte Rationalisierungseffekt.

**Patentansprüche**

1. Vorrichtung zum Polierfräsen der Kanten von Kunststoffmaterial bestehend aus einem stabilen Gehäuse (1) dessen oberen Abschluß eine waagerechte Arbeitsplatte (2) bildet, einem am Gehäuse befestigten regelbarem Elektromotor (3) für den Betrieb einer Transportvorrichtung (4), die aus zwei symmetrisch angeordneten, um je zwei Antriebs- und Umlenkrollen (5) laufenden elastischen Endlostransportbändern (6) besteht, die selbständig den nötigen Preßdruck für den Vorschub des Kunststoffmaterials ausüben und die durch den Elektromotor (3) synchron und mit gleicher Transportrichtung angetrieben werden und wobei die Arbeitsplatte (2) mittig zwischen den beiden Transportbändern (6) eine runde Öffnung (7) besitzt, welche die berührungsfreie Drehung eines von einem regelbaren Elektromotor (8) angetriebenen Radialfräskopfs (9) gestaltet und einer auf die Öffnung (7) hinführenden waagerechten Einlauf-Schiene (10) sowie einer höhenregulierbaren, um die Höhe der vom Kunststoffmaterial wegzufräsenden Schicht über der Einlaufschiene (10) und in deren Richtung waagerecht angebrachten von der Öffnung (7) wegführenden Auslaufschiene (11),
dadurch gekennzeichnet, daß

a) der Radialfräskopf (9) mit je einem polykristallinen, zerspanend wirkenden Diamanten (12) und einem polierend wirkenden Naturdiamanten (13), die diametral am Fräskopf (9) befestigt sind, bestückt ist, daß

b) der Radialfräskopf (9) von seiner Peripherie her mehrere regelmäßige Einschnitte (14) besitzt, die Turbinenwirkung hervorrufen und daß

c) die Öffnung (7) in einen Vakuum-Kanal (14) mit Saugvorrichtung (15) mündet, durch welchen die bei der Kantenfräsung anfallenden Partikel kontinuierlich im Vakuum abgesaugt werden.

2. Vorrichtung gemäß Anspruch 1, dadurch gekennzeichnet, daß das Gehäuse (1) mindestens im Sockelbereich als Masse Polymerbeton erhält.

3. Vorrichtung gemäß Anspruch 1, dadurch gekennzeichnet, daß der Naturdiamant (13) am Radialfräskopf (9) unter leicht negativem Sturz befestigt ist.

4. Vorrichtung gemäß Anspruch 1, dadurch gekennzeichnet, daß der regelbare Elektromotor (8) den Radialfräskopf (9) über eine Hochleistungsspindel (16) treibt.

**Claims**

1. Device for polishing and milling the edges of plastic material consisting of a stable housing (1), the upper closure of which forms a horizontal working plate (2), a controllable electric motor (3) attached to the housing to operate a transport device (4), which comprises two symmetrically arranged, resilient continuous transport belts (6) each running around two drive rollers and deflecting rollers (5), which transport belts (6) independently exert the required pressing power for feeding the plastic material, and which are driven by means of the electric motor (3) synchronously and in the same direction of transport, and wherein the working plate (2) has a round opening (7) centrally between the two transport belts (6), permitting contact-free rotation of a radial milling head (9) driven by a controllable electric motor (8), and a horizontal run-in rail (10) leading to the opening (7), and a height-adjustable runout rail (11) leading away from the opening (7) attached above the run-in rail (10) by as much as the height of the layer to be milled away from the plastic material, horizontally and in the direction thereof, characterised in that

a) the radial milling head (9) is fitted with one polycrystalline diamond (12) which removes material and one natural diamond (13) which has a polishing effect, which are fixed diametrally to the milling head (9), in that

b) the radial milling head (9) has several recesses (14) spaced evenly on the periphery which bring about a turbine effect, and in that

c) the opening (7) emerges in a vacuum channel (14) having suction device (15), by means of which the particles produced during edge milling are continuously sucked up by vacuum.

2. Device according to claim 1, characterised in that the housing (1) has polymer concrete as a solid mass at least in the base region.

3. Device according to claim 1, characterised in that the natural diamond (13) is attached to the radial milling head (9) at a slightly negative incline.

4. Device according to claim 1, characterised in that the controllable electric motor (8) drives the radial milling head (9) by means of a high performance spindle (16).

**Revendications**

1. Dispositif pour le fraisage-polissage des arêtes de matériaux en matière plastique, se composant d'un carter stable (1) dont la fermeture supérieure constitue un plan de travail horizontal (2), d'un moteur électrique réglable (3), fixé au carter pour l'entraînement d'un dispositif transporteur (4) qui se compose de deux bandes transporteuses sans fin élastiques (6), disposées symétriquement et tournant chacune autour de deux rouleaux d'entraînement et de renvoi (5), bandes qui exercent automatiquement la force de pression nécessaire pour l'avancement du matériau en matière plastique et qui sont entraînées en synchronisme et dans le même sens de transport par le moteur électrique (3), le plan de travail (2) comportant, au milieu entre les deux bandes transporteuses (6), une ouverture ronde (7) qui permet la rotation sans contact d'une tête de fraisage radial (9) entraînée par un moteur électrique réglable (8), ainsi que d'un rail d'entrée horizontal (10) aboutissant à l'ouverture (7) et que d'un rail de sortie (11) s'éloignant de l'ouverture (7), réglable en hauteur, disposé horizontalement dans la direction du rail d'entrée (10) et à une hauteur au-dessus de celui-ci qui correspond à celle de la couche à enlever par fraisage du matériau en matière plastique, caractérisé en ce que
   a) la tête de fraisage radial (9) est équipée d'un diamant polycristallin (12) à action d'enlèvement de copeaux et d'un diamant naturel (13) à action de polissage,
   b) la tête de fraisage radial (9) comporte, à partir de sa périphérie, plusieurs entailles régulières (14) qui produisent un effet de turbine, et
   c) l'ouverture (7) débouche dans un conduit à vide (14) avec dispositif d'aspiration (15), par lequel les particules produites au cours du fraisage des arêtes sont aspirées de façon continue.

2. Dispositif selon la revendication 1, caractérisé en ce qu'au moins dans la région du scole, le carter (1) reçoit un béton au polymère en tant que masse.

3. Dispositif selon la revendication 1, caractérisé en ce que le diamant naturel (13) est fixé à la tête de fraisage radial (9) avec un léger déport négatif.

4. Dispositif selon la revendication 1, caractérisé en ce que le moteur électrique réglable (8) entraîne la tête de fraisage radial (9) par l'intermédiaire d'une broche de haut rendement (16).

FIG. 1

FIG.2

EP 0 178 628 B1

FIG.4

FIG. 5

FIG. 3